# EUROPÄISCHE PATENTSCHRIFT

(11) **EP 2 451 283 B1**
(45) Veröffentlichungstag und Bekanntmachung des Hinweises auf die Patenterteilung: **21.06.2017**
(21) Anmeldenummer: 10731505.3
(22) Anmeldetag: 05.07.2010
(51) Int. Cl.: A01N 53/08, A01N 43/36, A01N 25/34, A01P 7/04, D06M 15/263, D06M 15/285, D06M 16/00, D06M 15/31, D06M 15/29, A01N 25/10

(54) **INSEKTIZID BESCHICHTETES SUBSTRAT ZUM SCHUTZ VON MENSCHEN UND HAUSTIEREN**
INSECTICIDE-COATED SUBSTRATE FOR PROTECTING HUMANS AND PETS
SUPPORT ENDUIT D'UN INSECTICIDE POUR LA PROTECTION D'ÊTRES HUMAINS ET D'ANIMAUX

(30) Priorität: 09.07.2009 EP 09165019
(43) Veröffentlichungstag der Anmeldung: 16.05.2012
(73) Patentinhaber: BASF SE, 67056 Ludwigshafen am Rhein (DE)
(72) Erfinder: LEININGER, Hartmut, 67434 Neustadt (DE); STUTZ, Susanne, 69469 Weinheim (DE); KARL, Ulrich, 67269 Grünstadt (DE)
(74) Vertreter: BASF IP Association
(86) Internationale Anmeldenummer: PCT/EP2010/059523
(87) Internationale Veröffentlichungsnummer: WO 2011/003845

(56) Entgegenhaltungen:
- WO-A2-2005/064072
- RAPHAEL N'GUESSAN ET AL.: "Control of pyrethroid-resistant Anopheles gambiae and Culex quinquefasciatus mosquitoes with chlorfenapyr in Benin", TROPICAL MEDICINE AND INTERNATIONAL HEALTH, Bd. 14, Nr. 4, April 2009 (2009-04), Seiten 389-395, XP007918601, in der Anmeldung erwähnt
- F. W. MOSHA ET AL.: "Experimental hut evaluation fo the pyrrole insecticide chlorfenapyr on bed nets for the control of Anopheles arabiensis and Culex quinquefasciatus", TROPICAL MEDICINE AND INTERNATIONAL HEALTH, Bd. 13, Nr. 5, Mai 2008 (2008-05), Seiten 644-652, XP007918595, in der Anmeldung erwähnt
- N'GUESSAN R ET AL: "Chlorfenapyr: A pyrrole insecticide for the control of pyrethroid or DDT resistant Anopheles gambiae (Diptera: Culicidae) mosquitoes", ACTA TROPICA, ELSEVIER SCIENCE BV., AMSTERDAM, NL, Bd. 102, Nr. 1, 1. April 2007 (2007-04-01) , Seiten 69-78, XP025320511, ISSN: 0001-706X, DOI: DOI:10.1016/J.ACTATROPICA.2007.03.003 [gefunden am 2007-04-01] in der Anmeldung erwähnt
- J.M. HOUGARD ET AL.: "Efficacy of mosquito nets treated with insectide mixtures or mosaics against insecticide resistant Anopheles gambiae and Culex quinquefasciatus (Diptera: Culicidae) in Côte d'Ivoire", BULLETIN OF ENTOMOLOGICAL RESEARCH, Bd. 93, 2003, Seiten 491-498, XP009148254, in der Anmeldung erwähnt
- G U I L L E T P ET AL: "Combined pyrethroid and carbamate 'two-in-one' treated mosquito nets: TM eld ef TM cacy against pyrethroid-resistant Anopheles gambiae and Culex quinquefasciatus", MEDICAL AND VETERINARY ENTOMOLOGY, BLACKWELL SCIENTIFIC PUBL., OXFORD, GB, Bd. 15, 1. Januar 2001 (2001-01-01), Seiten 105-112, XP007905295, ISSN: 0269-283X, DOI: DOI:10.1046/J.1365-2915.2001.00288.X in der Anmeldung erwähnt
- OXBOROUGH, R.M. ET AL.: "Mosquitoes and bednets: testing the spatial positioning of insectidie on nets and the rationale behing combination insecticide treatments", ANNALS OF TROPICAL MEDICINE AND PARASITOLOGY, Bd. 102, Nr. 8, 1. Dezember 2008 (2008-12-01), Seiten 717-727, XP009148252, in der Anmeldung erwähnt

## Beschreibung

Die Erfindung betrifft ein Substrat, insbesondere ein Netz, das mit einer pyrethroidhaltigen Wirkstoffmischung beschichtet wurde, zum Schutz von Menschen und Haustieren vor Schadinsekten, insbesondere Moskitos, sowie die zur Beschichtung geeigneten insektiziden Zusammensetzungen.

Zur Bekämpfung von vektorübertragenen Krankheiten wie Malaria, Gelbfieber, Denguefieber, lymphatische Filariose und Leishmaniose haben sich insektizid imprägnierte Moskitonetze besonders bewährt. Neben Sprühanwendungen von Insektiziden auf Hausinnenwänden bildet der Einsatz solcher Netze beispielsweise eine der Säulen des globalen "Roll Back Malaria Partnership" Projekts und wird von der WHO (World Health Organization) empfohlen. Um einen effektiven Schutz über einen längeren Zeitraum zu gewähren, müssen die Netze so imprägniert sein, dass die insektizide Wirkung auch nach einer größeren Anzahl von Wäschen nicht verlorengeht. Entsprechende, mit speziellen Insektizid-Bindemittel-Kombinationen behandelte Netze werden auch als LLINs (Long Lasting Insecticidal Nets) bezeichnet.

Als Insektizide werden dabei zur Zeit beinahe ausschließlich Pyrethroide verwendet, da diese Klasse von Insektiziden nicht nur eine hohe lethale Wirkung für die Insekten bei gleichzeitiger geringerer Toxizität für Säugetiere aufweist, sondern das Insekt auch durch eine schnelle Lähmung außer Gefecht gesetzt wird, bevor es zu einem Stich und damit zur Übertragung der Krankheit kommen kann (so genannter Knock-Down-Effekt).

Die langjährige und steigende Verwendung von Pyrethroiden birgt jedoch auch die Gefahr eines erhöhten Auftretens von Resistenzen, zumal diese Insektizide auch in der Landwirtschaft zur Bekämpfung von Ernteschädlingen eingesetzt werden. So hat sich beispielsweise in West- und Ostafrika eine Pyrethroidresistenz bei *Anopheles gambiae* und in Südafrika bei *Anopheles funestus* ausgebreitet.

Zur Brechung und Vermeidung von Resistenzenbildung wird der Einsatz alternativer Insektizide, gegebenenfalls in Mischung mit Pyrethroiden, diskutiert. Ein möglicher Kandidat dabei ist Chlorfenapyr, das eine gute Wirkung gegen Anopheles-Mücken aufweist, für Menschen nur gering toxisch ist und einen von Pyrethroiden verschiedenen Wirkmechanismus (Entkoppelung der oxidativen Phosphorylierung in Mitochondrien, mitochondrial electron transport inhibitor, METI) besitzt (siehe zum Beispiel R. N'Guessan et al., Acta Tropica 102 (2007) 69-78; F.W. Mosha et al., Tropical Medicine and International Health 13(5) 2008 644-652; R. N'Guessan et al., Tropical Medicine and International Health 14(4) (2009) 1-7). In den genannten Dokumenten werden auch Kombinationen von Chlorfenapyr mit einem Pyrethroid vorgeschlagen.

In der Praxis jedoch ist es äußerst schwierig, ein System aus zwei unterschiedlichen Wirkstoffen und einem geeigneten Bindemittel bereitzustellen, das für beide insektizide Komponenten die Ansprüche an eine kontrollierte Abgabe bei gleichzeitiger hoher Waschfestigkeit erfüllt. So wird in der WO 2009/003468 (S. 2, Z. 9-15) festgestellt:
"When different insecticides are incorporated into a polymer matrix, [...] the migration of the insecticides can be difficult to control, as a migration promoter or inhibitor of one insecticide or synergist may influence the migration of the other insecticide. Thus, if a certain release is desired of different insecticides, this is a [sic!] difficult to achieve, though highly desired."

Die bekannt gewordenen Lösungen für den Einsatz von Insektizid-Kombinationen (oder von Kombinationen aus Insektizid und einem Synergist) schlagen deshalb zumindestens ein teilweise räumlich getrenntes Aufbringen der unterschiedlichen Wirkstoffe vor.

In der WO 2008/098572 ist eine zweilagige Beschichtung beschrieben, die eine erste Schicht aus einer Polymermatrix mit einem darin eingebrachten Synergisten enthält, auf den ein zweiter Beschichtungsfilm mit dem eingebrachten Insektizid aufgetragen wird.

In der WO 2009/003468 ist ein insektizider Faden beschrieben, der zwei mit unterschiedlichen Insektiziden/Synergisten imprägnierte Fasern enthält. Alternativ kann es sich um ein extrudiertes Monofilament handeln, das auf unterschiedlichen Abschnitten unterschiedliche Wirkstoffe/Synergisten enthält.

In der WO 2009/003469 ist eine insektizide Netzkonstruktion beschrieben, die in räumlich getrennten Abschnitten ein Insektizid und einen Synergisten enthält.

In der WO 2009/059607 ist ein Raum beschrieben, der ein erstes Objekt, beispielsweise ein Moskitonetz, enthält, das mit einem ersten Insektizid beschichtet ist, sowie ein zweites Objekt, beispielsweise eine Stuhllehne, das mit einem zweiten Insektizid imprägniert ist.

Oxborough et al., Annals of Tropical Medicine & Parasitology 102 (2008) 717-727 und P. Guillet et al., Medical and Veterinary Entomology 15 (2001) 105-112, beschreiben Insektizidkombinationen, bei denen in einer so genannten 2-in-1-Anwendung ein von Pyrethroiden verschiedenes Insektizid auf den oberen Teil eines Moskitonetzes aufgetragen wird, während die Seitenteile mit einem Pyrethroid behandelt werden.

In der WO 2005/064072 ist alpha-Cypermethrin in Kombination mit einem Acrylatbindemittel beschrieben.

Die genannten Materialien und Vorrichtungen sind jedoch in der Regel aufwändig in der Herstellung und Anwendung, was oft auch aus ökonomischen Erwägungen unpraktikabel ist, und bieten insbesondere was die Effizienz angeht noch einen breiten Raum für Verbesserungen.

Es bestand daher weiterhin die Aufgabe, insbesondere dauerhaft insektizid imprägnierte Netze bereitzustellen, welche zum einen durch die Kombination eines Pyrethroids mit einem weiteren Insektizid eine gute Eignung zur Brechung von Pyrethroidresistenzen aufweisen, zum anderen aber bei guter insektizider Wirkung sehr einfach in der Herstellung und Anwendung sind.

Es wurde gefunden, dass sich bestimmte Substrate, insbesondere Textilmaterialien, bevorzugt Netze, die mit einem Pyrethroid und Chlorfenapyr in Kombination mit Mischung aus einem bestimmten Acrylatbinder beschichtet wurden, in besonderer Weise zum Schutz von Menschen oder Haustieren vor Schadinsekten eignen.

In der WO 2008/052913 wird unter anderem eine Kombination aus α-Cypermethrin und Chlorfenapyr zur Imprägnierung von Netzen vorgeschlagen, mit denen Kulturpflanzen geschützt werden sollen. Allerdings sind für solche Anwendungen die Anforderungen an die Waschfestigkeit niedrig, und es findet sich kein Hinweis in dem Dokument, welche Kombination aus Insektizidmischung und Bindemittel für eine Anwendung zum Schutz von Menschen und Haustieren vor vektorübetragenen Krankheiten geeignet wäre.

Gegenstand der Erfindung ist daher ein Substrat,
beschichtet mit einer Zusammensetzung, enthaltend
A) 0,1 bis 45 Gew.-% (bezogen auf die Summe aus A und B) einer Mischung A, bestehend aus
   A1) 99 bis 1 Gew.-% (bezogen auf A) alpha-Cypermethrin;
   A2) 1 bis 99 Gew.-% (bezogen auf A) Chlorfenapyr,
   und
B) 99,9 bis 55 Gew.-% (bezogen auf die Summe aus A und B) eines Acrylatbinders, erhältlich durch Emulsionspolymerisation von
   B1) 20 bis 93 Gew.-% (bezogen auf B) eines oder mehrerer (Meth)acrylate der Formel (I)

      H₂C=CR¹-COOR² (I)

      wobei
      - R¹: H oder CH₃ und
      - R²: eine lineare oder verzweigte C₁C₁₂-Alkylgruppe bedeuten;
   B2) 1 bis 5 Gew.-% (bezogen auf B) mindestens eines Monomers aus der Gruppe N-Methylolacrylamid, N-Methylolmethacrylamid, N-N'-Bismethylolmaleinsäurediamid und N,N'-Bismethylolfumarsäurediamid;
   B3) 0,2 bis 5 Gew.-% (bezogen auf B) mindestens eines Monomers aus der Gruppe Acrylsäure, Methacrylsäure, Vinylsulfonsäure, Maleinsäure und Fumarsäure;
   B4) 0 bis 5 Gew.-% (bezogen auf B) mindestens eines Monomers aus den Gruppen
      B4A) Monomere der Formel (II) und/oder (III),

         H₂C=CR³X (II)

         ZHC=CHZ (III)

         wobei die Symbole folgende Bedeutungen haben:
         - R³: ist H oder CH₃;
         - X: ist Z, -CO-NH-CH₂-NH-CO-CR³=CH₂ oder COO-CH₂-CO-CH₂-COOR⁴;
         - Z: ist gleich CONH₂, CONH-CH₂-OR⁵, COO-Y-OH, CO-Glycidyl, CHO oder CO-Y-OH;
         - Y: ist ₁-C₈-Alkylen und
         - R⁴, R⁵: sind gleich oder verschieden eine lineare oder verzweigte C₁-C₁₀-Alkylgruppe;
      B4B) Acrylsäureallylester, Acrylsäuremethallylester, Methacrylsäureallylester, Methacrylsäuremethallylester, Maleinsäurediallylester, Maleinsäuredimethallylester, Fumarsäureallylester, Fumarsäuremethallylester, Phthalsäurediallylester, Phthalsäuredimethallylester, Terephthalsäurediallylester, Terephthalsäuredimethallylester, p-Divinylbenzol und Ethylenglykoldiallylether;
   B5) 0 bis 40 Gew.-% (bezogen auf B) mindestens eines Monomers aus den Gruppen
      B5A) Acrylnitril, Methacrylnitril, Maleinsäuredinitril und Fumarsäuredinitril und/oder
      B5B) von B1 - B4 verschiedene, unpolare ethylenisch ungesättigte Monomere;
wobei das gewichtsmittlere Molekulargewicht der nicht vernetzten Emulsionspolymere zwischen 40 000 und 250 000 Dalton, bestimmt mit Gel-Permeations-Chromatographie liegt.

Weiterhin Gegenstand der Erfindung ist die Verwendung des erfindungsgemäßen Substrats zum Schutz von Menschen und Haustieren vor Schadinsekten und vor vektorübertragenen Krankheiten.

Ebenso Gegenstand der Erfindung sind Verfahren zur Bekämpfung von Schadinsekten, sowie zum Schutz von Menschen und Haustieren vor Schadinsekten und/oder vektorübertragenen Krankheiten, wobei man ein erfindungsgemäßes beschichtetes Substrat in einem Gebäude anbringt.

Weiterhin Gegenstand der Erfindung ist eine wässrige Formulierung zur insektiziden Beschichtung von Substraten, enthaltend die erfindungsgemäße Zusammensetzung.

Die erfindungsgemäß beschichteten Substrate zeichnen sich durch einfache Herstellung und, insbesondere in der Form von Netzen, eine einfache Anwendung aus. Erfindungsgemäß beschichtete Netze weisen auch nach mehrfachem Waschen eine gute insektizide Wirkung sogar gegen pyrethroidresistente Schadinsekten auf. Die insektizid beschichteten Substrate zeigen günstige toxikologische Werte und erlauben eine effektive Bekämpfung auch pyrethroidresistenter Schadinsekten.

### Insektizide

Erfindungsgemäß wird eine Mischung aus Chlorfenapyr und alpha-Cypermethrin eingesetzt.
Chlorfenapyr (V), 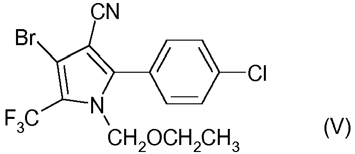 (IUPAC Name: 4-Brom-2-(4-chlorphenyl)-1-ethoxymethyl(-5-trifluormethylpyrrol-3-carbonitril) ist kommerziell von der BASF SE erhältlich und ist beispielsweise beschrieben in: C.D.S. Tomlin (Hrsg.), The Pesticide Manual, 14. Aufl., British Crop Protection Council, Alton (UK) 2006.

Das Pyrethroid alpha-Cypermethrin ist bekannt und kommerziell erhältlich, beispielsweise von der BASF SE, Ludwigshafen, Deutschland. Die Wirkstoffe sind beispielsweise in The Pesticide Manual (siehe oben) beschrieben. Weitere Angaben finden sich auch in H. Mehldorn (Hrsg.), Encyclopedic Reference of Parasitology, 2. Aufl., Disease Treatment, Therapy, 2001. Ebenso ist Piperonylbutoxid in The Pesticide Manual (s.o.) beschrieben.

Das Mengenverhältnis Chlorfenapyr : alpha-Cypermethrin beträgt im Allgemeinen 0,01 - 100 : 1, bevorzugt 0,1 - 10 : 1, besonders bevorzugt 0,1 - 5 : 1, insbesondere 0,5 - 2 : 1.

Die Konzentration der Insektizidmischung (Chlorfenapyr und alpha-Cypermethrin) in der vorzugsweise wässrigen Formulierung, welche zur Beschichtung des Substrats dient (siehe unten), wird so eingestellt, dass sich bei bekannter Flüssigkeitsaufnahme des Substrats die gewünschte Insektizidkonzentration auf dem Netz ergibt. Im Allgemeinen beträgt die Menge der Insektizidmischung in der wässrigen Formulierung 0,05 bis 1 Gew.-%, vorzugsweise 0,1 bis 0,7 Gew.-% (bezogen auf die wässrige Formulierung).

Die Partikelgröße der Insektizide in der wässrigen Formulierung beträgt im Allgemeinen von 50 nm bis 20 µm, vorzugsweise 50 nm bis 8 µm, besonders bevorzugt 50 nm bis 4 µm, insbesondere 50 nm bis 500 nm.

### Acrylatbinder (B)

Das Bindemittel dient zum Fixieren der Wirkstoffkombination auf dem Textilmaterial. Hierdurch wird erreicht, dass die Wirkstoffe insbesondere bei mehrmaligem Waschen nicht oder zumindest nur sehr langsam ausgewaschen werden.

Bei dem erfindungsgemäß eingesetzten Acrylatbinder handelt es sich um ein Copolymer, erhältlich durch Emulsionspolymerisation der Komponenten B1 bis B4 sowie optional B5.

Als Komponente B1 werden ein oder mehrere, bevorzugt 1, 2 oder 3, besonders bevorzugt 1 (Meth)acrylat(e) der Formel (I) eingesetzt,

H₂C=CR¹-COOR² (I)

wobei die Symbole folgende Bedeutungen haben:
- R¹: ist H oder CH₃, bevorzugt H, und
- R²: ist C₁-C₁₀-Alkyl, vorzugsweise Methyl, Ethyl, n-Propyl, i-Propyl, n-Butyl, i-Butyl, sec.-Butyl, t-Butyl, n-Pentyl, sec.-Pentyl, neo-Pentyl, 1,2-Dimethylpropyl, i-Amyl, n-Hexyl, i-Hexyl, n-Heptyl, n-Octyl, 2-Ethylhexyl, n-Nonyl oder n-Decyl, besonders bevorzugt Methyl, Ethyl, n-Butyl oder 2-Ethylhexyl, ganz besonders bevorzugt sind Ethyl, n-Butyl oder 2-Ethylhexyl.

Bevorzugt als Komponente B1 sind Methylacrylat, Ethylacrylat, n-Butylacrylat, 2-Ethylhexylacrylat und Methylmethacrylat. Bevorzugt sind auch Butylacrylat alleine oder in Mischung mit Methylmethacrylat oder Ethylacrylat. Insbesondere bevorzugt ist n-Butylacrylat.

Als Komponente B2 wird mindestens ein Monomer aus der Gruppe N-Methylolacrylamid, N-Methylolmethacrylamid, N,N'-Bismethylolmaleinsäurediamid und N,N'-Bismethylolfumarsäurediamid eingesetzt.

Bevorzugt sind N-Methylolacrylamid und N-Methylolmethacrylamid, insbesondere N-Methylolmethacrylamid.

Als Komponente B3 werden ein oder mehrere Monomere, bevorzugt ein oder zwei Monomere der Gruppe Acrylsäure, Methacrylsäure, Vinylsulfonsäure, Maleinsäure und Fumarsäure eingesetzt. Bevorzugt sind Acrylsäure und Methacrylsäure; Acrylsäure ist besonders bevorzugt.

Als Komponente B4 werden ein oder mehrere Monomere, bevorzugt ein oder zwei Monomere aus den Gruppen B4A und/oder B4B eingesetzt.

Monomere der Gruppe B4A sind solche der Formel (II) und/oder (III),

H₂C=CR³X (II)

ZHC=CHZ (III)

wobei die Symbole folgende Bedeutungen haben:
R³ ist H oder CH₃, bevorzugt H;
X ist Z, -CO-NH-CH₂-NH-CO-CR³=CH₂ oder COO-CH₂-CO-CH₂-COOR⁴, bevorzugt Z;
Z ist gleich CONH₂, CONH-CH₂-OR⁵, COO-Y-OH, COO-Glycidyl, CHO, CO-Y-OH, bevorzugt CONH₂;
   Y ist C₁-C₈-Alkylen, bevorzugt C₂-C₆-Alkylen und
   R⁴, R⁵ sind gleich oder verschieden eine lineare oder verzweigte C₁-C₁₀-Alkylgruppe; sowie (meth)acrylmodifizierte Benzophenone, wie sie zum Beispiel in der EP-A 0 346 734 beschrieben sind.

Bevorzugt als Monomere der Gruppe B4A sind Acrylsäureacetoacetylester, Methacrylsäureacetoacetylester, Acrylamid, Methacrylamid, Maleinsäurediamid, N-Methoxymethylacrylamid, N-n-Butoxymethylacrylamid, Acrylsäure-3-hydroxypropylester, Methacrylsäure-3-hydroxypropylester, Acrylsäure-4-hydroxybutylester, Methacrylsäure-4-hydroxybutylester, Acrylsäure-6-hydroxyhexylester, Methacrylsäure-6-hydroxyhexylester, Acrylsäure-2-hydroxy-3-chlorpropylester, Methacrylsäure-3-hydroxy-3-chlorpropylester, Acrylsäureglycidylester und Methacrylsäureglycidylester. Besonders bevorzugt sind Acrylamid, Methacrylsäure-3-hydroxypropylester, Butandiolmonoacrylatacetylacetat, Methacrylsäureglycidylester und 4-Acryloxybenzophenon.

Als Monomere der Gruppe B4B werden Acrylsäureallylester, Acrylsäuremethallylester, Methacrylsäureallylester, Methacrylsäuremethallylester, Maleinsäurediallylester, Maleinsäuredimethylallylester, Fumarsäureallylester, Fumarsäuremethallylester, Phthalsäurediallylester, Phthalsäuredimethylallylester, Terephthalsäurediallylester, Terephthalsäuredimethallylester, p-Divinylbenzol, Butan-1,4-diol-diallylether und Butan-1,4-diol-dimethallylether eingesetzt.

Bevorzugte Monomere der Gruppe B4 sind solche der Gruppe B4A, wobei der Einsatz von einem oder zwei Monomeren aus dieser Gruppe bevorzugt ist.

Bevorzugte Monomere der Gruppe B5 sind solche der Gruppe B5A, sowie vinylaromatische Monomere aus der Gruppe B5B.

Als Komponente B5A wird bevorzugt Acrylnitril oder Methacrylnitril, bevorzugt Acrylnitril eingesetzt.

Als Komponente B5B sind Styrol und α-Methylstyrol bevorzugt, insbesondere bevorzugt ist Styrol.

In einer bevorzugten Ausführungsform wird zur Herstellung des Acrylatbinders Acrylnitril als Monomer der Komponente B5 eingesetzt.

Der Acrylatbinder (B) ist erhältlich durch Emulsionspolymerisation von (Angaben in Gew.-% sind jeweils bezogen auf die Gesamtmenge B):
b1) 20 bis 93 Gew.-%, bevorzugt 50 bis 90 Gew.-%, besonders bevorzugt 60 bis 90 Gew.-%, insbesondre 75 bis 85 Gew.-%, der Komponente B1;
b2) 1 bis 5 Gew.-%, bevorzugt 1,5 bis 3 Gew.-% der Komponente B2;
b3) 0,2 bis 5 Gew.-%, bevorzugt 0,5 bis 4 Gew.-%, besonders bevorzugt 0,75 bis 4 Gew.-%, insbesondere 1 bis 3 Gew.-% der Komponente B3;
b4) 0 bis 7 Gew.-%, bevorzugt 0 bis 5 Gew.-%, besonders bevorzugt 0 bis 4,5 Gew.-%, insbesondere 0 oder 0,2 bis 4,5 Gew.-% der Komponente B4 und
b5) 0 bis 40 Gew.-%, bevorzugt 5 bis 40 Gew.-%, besonders bevorzugt 5 bis 30 Gew.-%, insbesondere 0 oder 5 bis 26 Gew.-% der Komponente B5

Geeignete Verfahren sind dem Fachmann bekannt und beispielsweise in der WO 2005/064072 (Seite 20, Zeile 20 bis Seite 23, Zeile 15) beschrieben.

Das gewichtsmittlere Molekulargewicht der erhaltenen, nicht vernetzten Emulsionspolymere liegt zwischen 40 000 und 250 000 (mit GPC (Gel-Permeations-Chromatographie) bestimmt). Das Molekulargewicht wird im Allgemeinen durch den Einsatz von Kettenabbruchreagenzien, beispielsweise schwefelorganischen Verbindungen, in üblichen Mengen kontrolliert.

Der erfindungsgemäß eingesetzte Acrylatbinder wird im Allgemeinen in Form einer wässrigen Dispersion erhalten und wird in der erfindungsgemäßen insektiziden Formulierung üblicherweise in dieser Form eingesetzt.

Der erfindungsgemäße Acrylatbinder kann weiterhin übliche, dem Fachmann geläufige Zusatzstoffe enthalten, beispielsweise Filmbildner und/oder Weichmacher, zum Beispiel Adipate, Phthalate, Butyldiglykol, Mischungen von Diestern, erhältlich durch Reaktion von Dicarbonsäuren mit geradkettigen oder verzweigten Alkoholen. Geeignete Dicarbonsäuren und Alkohole sind dem Fachmann bekannt.

### Formulierung zum Imprägnieren - Vernetzer

Zur Herstellung der erfindungsgemäßen Substrate, insbesondere Netze, können die Bindemittel in Form einer Formulierung in einem Lösemittel, bevorzugt als wässrige Formulierung eingesetzt werden; die Erfindung umfasst aber auch lösemittelfreie Formulierungen.

In einer bevorzugten Ausführungsform werden wässrige Formulierungen eingesetzt, welche 55 bis 99 Gew. % Wasser, bevorzugt 85 bis 98 Gew. % Wasser und 0,5 bis 45 Gew. %, bevorzugt 1 bis 10 Gew. % an Feststoffen enthalten, wobei die Mengenangaben jeweils auf die Summe aller Komponenten in der Formulierung bezogen sind. Die genaue Konzentration richtet sich auch nach dem Adsorptionsvermögen des Textilmaterials.

Bei den Feststoffen handelt es sich um den Acrylatbinder, die Insektizidmischung, optional mindestens einen Vernetzer sowie optional weitere Komponenten.

Bevorzugt wird mindestens ein wasserdispergierbarer Vernetzer eingesetzt. Hierbei handelt es sich insbesondere um einen Vernetzer, welcher über freie Isocyanatgruppen verfügt. Hierbei handelt es sich bevorzugt um Isocyanurate, die über freie Isocyanatgruppen verfügen, bevorzugt um Isocyanurate, welche sich von aliphatischen, cycloaliphatischen oder aromatische Diisocyanaten mit 4 bis 12 Kohlenstoffatomen ableiten. Beispiele umfassen 1,6-Hexamethylendiisocyanat (HMDI), 1,12-Dodecandiisocyanat, 2,2'- und 2,4'-Dicyclohexylmethandiisocyanat, 2,6- und/oder 2,4-Toluyldiisocyanat, 2-Ethyltetramethylendiisocyanat, 2-Methylpentamethylendiisocyanat, Tetramethylen-1,4-diisocyanat, Lysinesterdiisocyanat (CDI), Cyclohexan-1,3 und/oder 1,4-diisocyanat, 1-Isocyanato-3,3,5-trimethyl-5-isocyanatomethylcyclohexan (IPDI), 4,4', 2,4' und/oder 2,2'-Diphenylmethandiisocyanat (monomeres MDI), Polyphenylpolymethylenpolyisocyanat (polymeres MDI) oder Mischungen enthaltend mindestens zwei der genannten Isocyanate. Bevorzugt sind Isocyanurate auf Basis von 1,6-Hexamethylendiisocyanat. Besonders bevorzugt sind Isocyanurate, welche zusätzliche hydrophile Gruppen aufweisen, wie insbesondere Polyethylenoxidgruppen. Ganz besonders bevorzugt sind Isocyanurate, die mit einem Polyalkylenoxid basierend auf Ethylenoxid und/oder 1,2-Propylenoxid, vorzugsweise Ethylenoxid hydrophilisiert wurden.

Die erfindungsgemäß als Vernetzer eingesetzten Isocyanurate enthalten vorzugsweise 5 bis 25 Gew.-%, besonders bevorzugt 7 bis 20 Gew.-%, insbesondere 10 bis 15 Gew.-% an freien Isocyanatgruppen (basierend auf der Menge von Isocyanat, die als Ausgangsmaterial zur Herstellung der Isocyanurate eingesetzt wurde).

Die Herstellung derartiger Isocyanurate ist dem Fachmann bekannt. Sie werden bevorzugt gelöst in polar aprotischen Lösemitteln wie Ethylencarbonat oder Propylencarbonat, eingesetzt. Weitere Einzelheiten zu den bevorzugten, Isocyanatgruppen aufweisenden Vernetzern sind in WO 2008/052913 Seite 34, Zeile 6 bis Seite 35, Zeile 3 offenbart. Besonders bevorzugt wird ein auf 1,6-Hexamethylendiisocyanat (HMDI) basierendes Isocyanurat, welches über zusätzliche Polyethylenoxidgruppen verfügt, eingesetzt, wobei das Isocyanurat in Propylencarbonat gelöst ist (70 Gew. % HMDI in Propylencarbonat). Die Menge der freien Isocyanatgruppen beträgt ca. 11 bis 12 Gew. %, bezogen auf die Lösung. Der Vernetzer wird bevorzugt in einer Menge von 1 bis 10 Gew. % bezüglich der Menge aller Feststoffe der Formulierung eingesetzt.

Die Formulierung kann weiterhin typische Additive und Hilfsmittel, UV-Schutzmittel, Entschäumer sowie Farbstoffe enthalten. Beispiele derartiger Additive sind in WO 2006/128870 Seite 41, Zeile 38 bis Seite 43, Zeile 22 genannt.

Farbstoffe und Pigmente können neben rein ästhetischen Zwecken eine Warnwirkung zum Beispiel auf Vögel oder Säugetiere ausüben oder eine Tarnung des insektiziden Textilmaterials gegenüber Insekten bewirken. Darüber hinaus können dunkle Farben eine evtl. gewünschte Beschattung bewirken sowie die schädliche Wirkung des UV-Lichts auf Wirkstoffe und textile Fasern bei Anwendungen im Freien abschwächen.

Netzmittel und Verdicker können eingesetzt werden, um bei schlecht und daher inhomogen benetzbaren Substraten, wie beispielsweise Polyolefinfasern, einen gleichmäßigen Auftrag der Behandlungsflotte zu erreichen. Zu diesem Zwecke könnten auch mit Wasser mischbare Lösemittel eingesetzt werden, was aber wegen der möglichen Umweltschädlichkeit nicht bevorzugt wird. Dem Fachmann sind die üblicherweise verwendeten Hilfsmittel und ihre Konzentrationen bekannt.

Bevorzugt können die Formulierungen Antioxidantien, Peroxidfänger, UV-Absorber und Lichtschutzmittel umfassen. Dies ist insbesondere bei Netzen empfehlenswert, die im Freien einer erhöhten UV-Bestrahlung ausgesetzt sind. Die genannten Zusätze schützen sowohl die Substratfasern wie auch die Wirkstoffe vor strahlungsbedingter Zersetzung.

Geeignete UV-Absorber sind beispielsweise in der WO 02/46503 oder in der WO 2007/077101 beschrieben. UV-Absorber können einerseits als Komponente der Formulierung zum Imprägnieren verwendet werden. Sie können aber auch, beispielsweise bei Polyolefinen und Polyestern, bereits im Zuge der Herstellung der Fasern eingearbeitet werden. Es können auch vorteilhaft Mischungen mehrerer Stabilisatoren, die verschiedene Schutzwirkungen ausüben, eingesetzt werden. Bezogen auf das Gewicht des unbehandelten Textilmaterials werden in der Regel 0.2 bis 5 Gew.-%, bevorzugt 0.25 bis 4 % und ganz besonders bevorzugt 0.5 bis 3.5 % Stabilisator eingesetzt. Die Menge in der Formulierung wird vom Fachmann entsprechend eingestellt.

### Verfahren zum Beschichten

Zum Herstellen des erfindungsgemäßen, beschichteten Substrats wird das unbehandelte Material mit einer Mischung, mindestens umfassend den Acrylatbinder und die Insektizidmischung, behandelt, bevorzugt mit der genannten wässrigen Formulierung. Die Behandlung kann nach dem Fachmann bekannten Verfahren vorgenommen werden, beispielsweise durch Tauchen oder Besprühen des unbehandelten Substrats mit der Formulierung. Die Behandlung kann bei Raumtemperatur oder auch bei erhöhten Temperaturen vorgenommen werden. Sofern vernetzt werden soll, kann sich an den Behandlungsschritt bei niedrigeren Temperaturen, beispielsweise bei 10 bis 70°C noch eine Nachbehandlung bei erhöhten Temperaturen, zum Beispiel bei 50 bis 170°C, bevorzugt 70 bis 150°C anschließen. Einzelheiten einer solchen Behandlung sind beispielsweise in WO 2005/064072 Seite 29, Zeile 16 bis Seite 35, Zeile 36 offenbart.

Das Beschichten kann mittels üblicher, dem Fachmann bekannten Apparaturen zum Imprägnieren erfolgen. Die Beschichtung kann auch mit einfachen Mitteln durch den Endverbraucher selbst vorgenommen werden, beispielsweise durch Eintunken gefolgt von Trocknen an der Luft. Hierzu wird bevorzugt ein geeignetes Bindemittelsystem gewählt, welches nicht bei höheren Temperaturen aushärten muss.

### Substrat

Als Substratmaterial eignen sich beispielsweise Textilmaterialien, nicht-textile Kunststoffmaterialien, Papier, Leder, Kunstleder, Folien und andere, vorzugsweise flexible Materialien.

Bei dem eingesetzten Substrat handelt es sich bevorzugt um ein Textilmaterial, insbesondere Netze aus Textilfasern. Es kann sich hierbei um Netze aus natürlichen Fasern oder aus synthetischen Fasern handeln. Selbstverständlich kann es sich auch um Mischungen zweier oder mehrerer verschiedener Fasern handeln. Beispiele für natürliche Fasern umfassen Baumwoll-, Jute- oder Leinenfasern. Bevorzugt handelt es sich um synthetische Fasern aus geeigneten Polymeren. Beispiele umfassen Polyamide, Polyester, Polyacrylnitril oder Polyolefine. Bevorzugt handelt es sich um Polyamide, Polyolefine und Polyester, besonders bevorzugt um Polyolefine, insbesondere Polypropylen oder Polyethylen, und Polyester und ganz besonders bevorzugt sind Polyesterfasern, insbesondere Polyethylenterephthalat (PET).

Es kann sich um glatte oder texturierte Fasern handeln. Bei den Fasern kann es sich um Mono-, Oligo- oder Multifilamente handeln.

Bei Polypropylen und Polyethylen kann es sich um Polypropylen- beziehungsweise Polyethylen-Homopolymere handeln. Es kann sich aber auch um Copolymere handeln, welche neben dem Ethylen beziehungsweise Propylen geringe Mengen anderer Comonomere umfassen. Bei geeigneten Comonomeren kann es sich insbesondere um andere Olefine wie beispielsweise Ethylen oder Propylen sowie 1-Buten, 2-Buten, Isobuten, 1-Penten, 1-Hexen, 1-Hepten, 1-Octen, Styrol oder α-Methylstyrol, Diene und/oder Polyene handeln. Der Anteil von Comonomeren im Polyethylen beziehungsweise Polypropylen beträgt im Allgemeinen maximal 20 Gew. %, bevorzugt maximal 10 Gew. %. Art und Menge der Comonomere werden vom Fachmann je nach den gewünschten Eigenschaften der Faser gewählt.

Besonders bevorzugt zur Faserherstellung sind relativ hochmolekulare, zähfließende Produkte, welche in üblicher Art und Weise durch Ihren Schmelzflussindex (bestimmt nach ISO 1133) charakterisiert werden. Bevorzugt kann es sich um mindestens ein Polypropylen beziehungsweise Polyethylen mit einem Schmelzflussindex MFR (230°C, 2,16 kg) von 0,1 bis 60 g / 10 min handeln. Bevorzugt handelt es sich um Polypropylen mit einem Schmelzflussindex MFR (230°C, 2,16 kg) von 1 bis 50 g / 10 min, besonders bevorzugt 10 bis 45 g / 10 min und beispielsweise 30 bis 40 g / 10 min. Derartige Polypropylensorten eignen sich besonders zur Herstellung von Fasern. Selbstverständlich kann auch eine Mischung mehrerer verschiedener Sorten von Polypropylen eingesetzt werden.

Die Textilfasern weisen je nach der Art des Netzes eine Dicke von 0,05 bis 0,6 mm auf, bevorzugt 0,1 mm bis 0,4 mm, besonders bevorzugt 0,12 bis 0,35 mm und ganz besonders bevorzugt 0,2 bis 0,3 mm.

Das Textilmaterial wird beispielsweise in Form von Abdeckungen oder Bezügen eingesetzt, beispielsweise für Bettbezüge, Matratzen, Kissen, Gardinen, Wandbedeckungen, Teppiche, Fenster-, Schrank- und Türvorhänge, Decken, Planen und Zeltbahnen. Bevorzugt sind Netze, insbesondere Moskitonetze, beispielsweise Bettnetze zum Schutz gegen Moskitos und andere Schadinsekten.

Die bevorzugten eingesetzten Netze weisen bevorzugt ein Muster von Maschen mit einer geraden Anzahl von Ecken auf. Die Netze können hierbei bevorzugt nur aus einer einzigen Sorte von Maschen bestehen, beispielsweise nur aus viereckigen oder nur aus sechseckigen Maschen, oder sie können auch zwei oder mehrere Sorten verschiedener Maschen umfassen, beispielsweise eine Kombination aus achteckigen und viereckigen Maschen.

Die Maschen des Netzes sollten hierbei bevorzugt im Wesentlichen gleichartig sein, d.h. dass das Netz zwar durchaus kleinere Abweichungen im Hinblick auf Form und die Größe der Maschen aufweisen kann, dass die Werte aber um die Mittelwerte nicht übermäßig stark streuen.

Geeignete Maschengrößen (Seitenlänge einer quadratischen Masche) sind im Bereich von 5 mm, vorzugsweise 2,5 mm, insbesondere 1,5 mm als Obergrenze und 0,1 mm, vorzugsweise 0,25 mm, besonders bevorzugt 0,5 mm, insbesondere 0,7 mm als Untergrenze.

Die Maschen des Netzes werden bevorzugt ausgewählt aus der Gruppe von viereckigen, sechseckigen oder achteckigen Maschen.

Bei den viereckigen Maschen handelt es sich um Maschen in Form eines Parallelogramms mit den Seiten a und b. Der Begriff "Parallelogramm" umfasst selbstverständlich auch die Begriffe "Rechteck" und "Quadrat". Der kleinere Winkel zwischen den beiden Seiten des Parallelogramms liegt im Regelfalle zwischen 60 und 90°. Für den Grenzfall von 90° handelt es sich bei dem Parallelogramm um ein Rechteck. Für den Grenzfall a = b und 90° handelt es sich um ein Quadrat. Das Parallelogramm weist weiterhin die Höhe hₐ auf. Bei einem Rechteck beziehungsweise einem Quadrat entspricht die Höhe hₐ der Länge der Seite a. Quadratische Maschen sind besonders bevorzugt.

Bei den sechseckigen Maschen sind drei Paare von jeweils zueinander parallelen Seiten a, b und c in den Abständen hₐ, h_{b} und h_{c} angeordnet. Bei den achteckigen Maschen sind vier Paare von jeweils zueinander parallelen Seiten a, b, c und d in den Abständen hₐ, h_{b}, h_{c} und h_{d} angeordnet. Es ist dem Fachmann bekannt, dass sich aus Achtecken keine flächendeckenden Muster erstellen lassen. Ein Netz, welches achteckige Maschen umfasst, umfasst daher zusätzlich mindestens eine zweite Sorte von Maschen. Es kann sich hierbei um viereckige Maschen handeln.

In einer speziellen Ausführungsform der Erfindung beträgt die Höhe hₐ sowohl beim Parallelogramm, beim Sechseck und beim Achteck 0,1 bis 0,99 mm, bevorzugt 0,1 bis 0,9 mm, besonders bevorzugt 0,12 bis 0,8 mm und ganz besonders bevorzugt 0,25 bis 0,7 mm.

Beim Parallelogramm beträgt das Länge-zu-Höhe-Verhältnis b / hₐ 1:1 bis 5:1, bevorzugt 1:1 bis 4:1 und besonders bevorzugt 2:1 bis 4:1. Bei den Maschen kann es sich also für den Fall eines Verhältnis b / hₐ 1:1 um ein Quadrat mit einer Seitenlänge von 0,1 bis 0,99 mm handeln. Bei einem größeren Verhältnis von b / hₐ handelt es sich um ein in einer Richtung langgestrecktes Gebilde. Durch den Abstand hₐ von maximal 0,99 mm werden auch kleinere Insekten wirkungsvoll vom Passieren des Netzes abgehalten, während die Länge durchaus größer sein kann als 0,99 mm, so dass die Luftdurchlässigkeit des Netzes nicht übermäßig behindert wird.

Beim Sechseck beträgt das Verhältnis ((h_{b}+h_{c}) / 2) / hₐ 1:1 bis 5:1, bevorzugt 1:1 bis 4:1 und besonders bevorzugt 2:1 bis 4:1. Die Situation ist hier analog zum Parallelogramm. Für den Fall eines Verhältnisses von 1:1 handelt es sich um ein regelmäßiges Sechseck mit drei gleichen Seiten, welche jeweils den gleichen Abstand von nicht mehr als 0,99 mm zueinander aufweisen. Bei einem größeren Verhältnis ((h_{b}+h_{c}+h_{d}) / 2 ) / hₐ entsteht ein in einer Richtung langgestrecktes Sechseck. Die Wirkung hinsichtlich Insekten- beziehungsweise Luftdurchlässigkeit ist wie beim Parallelogramm.

Beim Achteck beträgt das Verhältnis ((h_{b}+h_{c}+h_{d}) / 3) / hₐ 1:1 bis 5:1, bevorzugt 1:1 bis 4:1 und besonders bevorzugt 2:1 bis 4:1. Die Situation ist hier analog zum Parallelogramm. Für den Fall eines Verhältnisses von 1:1 handelt es sich um ein regelmäßiges Achteck mit vier gleichen Seiten, welche jeweils den gleichen Abstand von nicht mehr als 0,99 mm zueinander aufweisen. Bei einem größeren Verhältnis ((h_{b}+h_{c}+h_{d})/ 3) / hₐ entsteht ein in einer Richtung langgestrecktes Achteck. Die Wirkung hinsichtlich Insekten- beziehungsweise Luftdurchlässigkeit ist wie beim Parallelogramm.

Neben vier- und sechseckigen Maschen können in dieser Ausführungsform beispielsweise auch Kombinationen von vier- und achteckigen Maschen eingesetzt werden oder die Form und Größe der Maschen in Teilen des Netzes variiert werden. Beispielsweise können die Ränder des Netzes dichter gewirkt werden, oder es können in Abständen dickere Textilfasern, die auch aus einem anderen Polymer hergestellt sind, zur Stabilisierung eingewirkt werden.

Die Begriffe "Höhe" und "Länge" beziehen sich auf die offene Fläche jeder Masche ohne Berücksichtigung der Fasern beziehungsweise der beschichteten Fasern. Analog bedeutet der Begriff "Maschengröße" im Sinne dieser Erfindung das Lochmaß der Maschen, d.h. die offene Fläche jeder Masche ohne Berücksichtigung der Fasern beziehungsweise der beschichteten Fasern.

Textile Netzmaterialien gemäß dieser Ausführungsform der Erfindung sind in der Europäischen Patentanmeldung 08161456.2 beschrieben.

Die Dicke der zur Herstellung des erfindungsgemäßen Textilmaterials, insbesondere der erfindungsgemäßen Netze, verwendeten Fasern werden vom Fachmann je nach den gewünschten Eigenschaften des Netzes gewählt. Je dicker die Fasern, desto größer ist im Regelfalle die mechanische Stabilität des Netzes, auf der anderen Seite wird mit abnehmender Maschengröße der Anteil an offener Fläche im Vergleich zum Anteil der von Fasern bedeckten Fläche immer geringer. Im Regelfalle sollte die Faserdicke so bemessen werden, dass das Netz zumindest 20 %, bevorzugt mindestens 40 % und insbesondere mindestens 50 % offene Fläche aufweist. Netze der geschilderten Art sind kommerziell erhältlich.

Bei den verwendeten Netzen kann es sich bevorzugt um einlagige Netze handeln. Es kann sich aber auch um so genannte Abstandsgewirke handeln, bei denen zwei Netze mithilfe von Einzelfäden miteinander zu einer Doppelschicht verbunden sind.

### Eigenschaften und Verwendung der erfindungsgemäßen Substrate

Erfindungsgemäße Substrate, insbesondere Netze, eignen sich zum Schutz von Menschen und Haustieren vor Schadinsekten und vor vektorübertragenen Krankheiten, welche durch die Schadinsekten übertragen werden.

Erfindungsgemäße Substrate eignen sich auch zur Bekämpfung von Schadinsekten, wobei man das erfindungsgemäße Substrat, vorzugsweise in Form eines Netzes, in einem Gebäude anbringt. In einer bevorzugten Ausführungsform des erfindungsgemäßen Verfahrens wird ein flexibles erfindungsgemäßes Substrat, insbesondere ein Netz, um ein Lebewesen oder unbelebtes Objekt angebracht, welches auf die Schadinsekten als mögliche Nahrungsquelle anziehend wirkt.

Der Begriff Schadinsekten umfasst erfindungsgemäß neben Insekten im eigentlichen Sinne auch schädliche, insbesondere als Vektor für die Übertragung von Krankheiten verantwortliche Spinnentiere (Arachnida).

Die erfindungsgemäßen Substrate eignen sich insbesondere zum Schutz vor beziehungsweise zur Bekämpfung von Gesundheits- und Vorratsschädlingen aus den Ordnungen Diptera, Siphonaptera, Blattaria, (Blattodea), Dermaptera, Hemiptera, Hymenoptera, Orthoptera, Isoptera, Thysanura, Phthiaraptera, Araneida und Acarina, sowie den Klassen Chilopoda und Diplopoda. Sie sind bevorzugt geeignet gegen Diptera, Hemiptera, Hymenoptera, Acarina und Siphonaptera.

Insbesondere eignen sie sich gegen Diptera, wie *Culicidae, Simuliidae, Ceratopogonidae, Tabanidae, Muscidae, Calliphoridae, Oestridae, Sarcophagidae, Hippoboscidae*), Siphonaptera (*Pulicidae, Rhopalopsyllidae, Ceratophyllidae*) und Acarina (*Ixodidae, Argasidae, Nuttalliellidae*), insbesondere gegen Stechmücken und Fliegen.

Insbesondere eignen sich die erfindungsgemäßen Substrate gegen:
Hundertfüßer (Chilopoda), zum Beispiel *Scutigera coleoptrata,*
Doppelfüßer (Diplopoda), zum Beispiel *Narceus spp.,*
Webspinnen (Araneae), zum Beispiel *Latrodectus mactans,* and *Loxosceles reclusa,*
Milben (Acaridida): zum Beispiel *Sarcoptes sp,*
Parasitäre Milben (Parasitiformes): Zecken (Ixodida), zum Beispiel *Ixodes scapularis, Ixodes holocyclus, Ixodes pacificus, Rhiphicephalus sanguineus, Dermacentor andersoni, Dermacentor variabilis, Amblyomma americanum, Ambryomma maculatum, Ornithodorus hermsi, Ornithodorus turicata* und Mesostigmata, zum Beispiel *Ornithonyssus bacoti* und *Dermanyssus gallinae,*
Termiten (Isoptera), zum Beispiel *Calotermes flavicollis, Leucotermes flavipes, Heterotermes aureus, Reticulitermes flavipes, Reticulitermes virginicus, Reticulitermes lucifugus, Termes natalensis* und *Coptotermes formosanus,*
Schaben (Blattaria - Blattodea), zum Beispiel *Blattella germanica, Blattella asahinae, Periplaneta americana, Periplaneta japonica, Periplaneta brunnea, Periplaneta fuligginosa, Periplaneta australasiae* und *Blatta orientalis,*
Zweiflügler (Diptera), wie Fliegen und Mücken, zum Beispiel *Aedes aegypti, Aedes albopictus, Aedes vexans, Anastrepha ludens, Anopheles maculipennis, Anopheles crucians, Anopheles albimanus, Anopheles gambiae, Anopheles freeborni, Anopheles leucosphyrus, Anopheles minimus, Anopheles quadrimaculatus, Calliphora vicina, Chrysomya bezziana, Chrysomya hominivorax, Chrysomya macellaria, Chrysops discalis, Chrysops silacea, Chrysops atlanticus, Cochliomyia hominivorax, Cordylobia anthropophaga, Culicoides furens, Culex pipiens, Culex nigripalpus, Culex quinquefasciatus, Culex tarsalis, Culiseta inornata, Culiseta melanura, Dermatobia hominis, Fannia canicularis, Gasterophilus intestinalis, Glossina morsitans, Glossina palpalis, Glossina fuscipes, Glossina tachinoides, Haematobia irritans, Haplodiplosis equestris, Hippelates spp., Hypoderma lineata, Leptoconops torrens, Lucilia caprina, Lucilia cuprina, Lucilia sericata, Lycoria pectoralis, Mansonia spp., Musca domestica, Muscina stabulans, Oestrus ovis, Phlebotomus argentipes, Psorophora columbiae, Psorophora discolor, Prosimulium mixtum, Sarcophaga haemorrhoidalis, Sarcophaga sp., Simulium vittatum, Stomoxys calcitrans, Tabanus bovinus, Tabanus atratus, Tabanus lineola* und *Tabanus similis,*
Ohrwürmer *(Dermaptera),* zum Beispiel *Forficula auricularia,*
Schnabelkerfe (Hemiptera), wie Läuse und Wanzen, zum Beispiel *Cimex lectularius, Cimex hemipterus, Reduvius senilis, Triatoma* spp., *Rhodnius prolixus* und *Arilus critatus,*
Hautflügler (Hymenoptera), wie Ameisen, Bienen, Wespen und Pflanzenwespen, zum Beispiel *Crematogaster spp., Hoplocampa minuta, Hoplocampa testudinea, Monomorium pharaonis, Solenopsis geminata, Solenopsis invicta, Solenopsis richteri, Solenopsis xyloni, Pogonomyrmex barbatus, Pogonomyrmex californicus, Dasymutilla occidentalis, Bombus* spp. *Vespula squamosa, Paravespula vulgaris, Paravespula pennsylvanica, Paravespula germanica, Dolichovespula maculata, Vespa crabro, Polistes rubiginosa, Camponotus floridanus* und *Linepithema humile,*
Springschrecken (Orthoptera), wie Grillen, Grashüpfer und Heuschrecken, zum Beispiel *Acheta domestica, Gryllotalpa gryllotalpa, Locusta migratoria, Melanoplus bivittatus, Melanoplus femurrubrum, Melanoplus mexicanus, Melanoplus sanguinipes, Melanoplus spretus, Nomadacris septemfasciata, Schistocerca americana, Schistocerca gregaria, Dociostaurus maroccanus, Tachycines asynamorus, Oedaleus senegalensis, Zonozerus variegatus, Hieroglyphus daganensis, Kraussaria angulifera, Calliptamus italicus, Chortoicetes terminifera* und *Locustana pardalina,*
Flöhe (Siphonaptera), zum Beispiel *Ctenocephalides felis, Ctenocephalides canis, Xenopsylla cheopis, Pulex irritans, Tunga penetrans* und *Nosopsyllus fasciatus,*
Zottenschwänze (Thysanura), wie Silberfischchen und Ofenfischchen, zum Beispiel *Lepisma saccharina* und *Thermobia domestica,*
Läuse (Phthiraptera), zum Beispiel *Pediculus humanus capitis, Pediculus humanus corporis, Pthirus pubis, Haematopinus eurysternus, Haematopinus suis*, *Linognathus vituli, Bovicola bovis, Menopon gallinae, Menacanthus stramineus* und *Solenopotes capillatus.*

Besonders bevorzugt eignet sich das erfindungsgemäße Substrat zum Schutz vor, beziehungsweise zur Bekämpfung von Stechmücken (Culicidae), insbesondere der Gattungen Anopheles, wie *Anopheles gambiae, Anopheles stephensi, Anopheles funestus, Anopheles maculipennis, Anopheles claviger und Anopheles plumbeus; Aedes, wie Aedes aegypti (Stegomyia aegypti), Aedes albopictus; Culex, wie Culex quinquefasciatus;* Culiseta; Haemagoggus; Mansonia; Ochlerotatus; Psorophora; Sabethes; Toxorhynchites; Verralina; Wyeomyia und Zeugnomyia.

Weiterhin eignen sich die erfindungsgemäßen Substrate bevorzugt zum Schutz vor beziehungsweise zur Bekämpfung von Siphonaptera (Flöhen), insbesondere Tunga (Sandflöhe), wie *Tunga penetrans.*

Besonders bevorzugt eignen sich erfindungsgemäße Substrate, insbesondere Netze, zur Bekämpfung von Schadinsekten, die entweder gegenüber Pyrethroiden oder Chlorfenapyr, bevorzugt Pyrethroiden eine Resistenz aufweisen.

Krankheiten, deren Übertragung verhindert werden kann, sind neben durch Plasmodien ausgelösten Krankheiten, wie zum Beispiel Malaria tropicana, Malaria tertiana und Malaria quartana, auch durch parasitäre Würmer ausgelöste Krankheiten, beispielsweise Filariose, Disofilariose, durch Viren ausgelöste Krankheiten, beispielsweise Gelbfieber, Dengue-Fieber, West-Nil-Fieber, Chikungunya-Fieber, Rift-Valley-Fieber, durch Bakterien ausgelöste Krankheiten, beispielsweise Tularämie und die durch den parasitären Einzeller Trypanosoma cruzi hervorgerufene und durch Raubwanzen übertragene Chagas-Krankheit (Südamerikanische Trypanosomiasis).

Daneben eignen sich die erfindungsgemäßen Substrate, insbesondere Netze, auch zum Schutz von zu lagerndem Erntegut, das heißt geernteten Pflanzen oder Pflanzenteilen, gegebenenfalls auch in bearbeiteter Form.

Sie können beispielsweise eingesetzt werden, indem man das zu schützende Gut mit den Netzen einwickelt. Bei dem zu schützenden Gut kann es sich beispielsweise um Holzstapel, Obst, Gemüse, Getreide, Kakaobohnen, Kaffeebohnen oder Gewürze handeln. Bei den Gütern kann es sich weiterhin um Ballen handeln. Beispiele umfassen Ballen ausgewählt aus der Gruppe von Tee, Tabak oder Baumwolle.

Die Erfindung wird durch die Beispiele näher erläutert, ohne sie dadurch zu beschränken.

### Beispiele

### A) Acrylatbinder

### Herstellung der Polymerdispersionen

### Allgemeine Vorschrift

250 g Wasser und 3 g Styrol Saatlatex (33 Gew.-%) mit einer mittleren Teilchengröße von 30 nm werden auf 85°C erhitzt, worauf 5 Gew.-% des Zulaufs 2 zugegeben werden. Nach 10 min. beginnt man mit der Zugabe von Zulauf 1 (s. u.) und dem restlichen Zulauf 2.

Zulauf 2 enthält 30 g Natriumperoxidisulfat gelöst in 39,9 g H₂O. Die Zusammensetzung des Zulaufs 1 ist in Tabelle 1 angegeben. Die Zuläufe 1 und 2 werden über 3 h zugegeben und dann für 0,5 h nachpolymerisiert.

**Tabelle 1 Zusammensetzung am Zulauf 1 in Gew.-% pphm (Teile pro hundert Monomere)**

| Monomer Zusammensetzung | MMA | S | AN | EHA | BA | EA | MaMol | AMol | AM | AS |
|---|---|---|---|---|---|---|---|---|---|---|
| A 1 | | 16.6 | | 30.0 | 30.0 | 20.0 | | 3.0 | | 0.4 |
| A 2 | 25.7 | 5.0 | | 5.3 | 60.0 | | 3.5 | | | 0.5 |
| A 3 | | 14.7 | 11.0 | | 70.0 | | 3.5 | | 0.5 | 0.3 |
| A 4 | 30.0 | 13.0 | 8.0 | | 45.2 | | | 3.0 | 0.5 | 0.3 |
| A 5 | 20.0 | 20.0 | | 17.0 | 23.0 | 15.3 | 3.5 | | | 1.2 |
| A 6 | 26.0 | | 13.0 | | 57.0 | | 3.0 | | | 1.0 |
| A 7 | 15.0 | | 13.0 | | 68.0 | | 3.0 | | | 1.0 |
| A 8 | | | 16.0 | | 81.0 | | 2.0 | | | 1.0 |

Die Menge des Initiators Natriumperoxidisulfat beträgt 0,3 Gewichtsteile, die des Emulgators 0,4 Gewichtsteile Dowfax 2A1 (Dow) und 0,6 Gewichtsteile Lumiten IRA (BASF SE), bezogen auf 100 Gewichtsteile der Monomerzusammensetzung aus Tabelle 1.

Abkürzungen
- MMA:: Methylmethacrylat
- S:: Styrol
- AN:: Acrylnitril
- EA:: Ethylacrylat
- EHA:: 2-Ethylhexylacrylat
- BA:: n-Butylacrylat
- Amol:: N-Methylolacrylamid
- MAMol:: N-Methylolmethacrylamid
- AS:: Acrylsäure
- AM:: Acrylamid

### Dowfax 2A1:

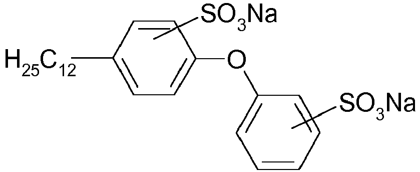

### Lumiten IRA:

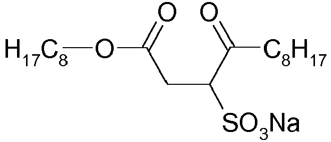

### B) Herstellung der verwendeten Netze:

**Tabelle 2**

| | Alphacypermethrin [mg/m²] | Alphacypermethrin-Badkonzentration [g/l] | Chlorfenapyr [mg/m²] | Chlorfenapyr Badkonzentration [g/l] | Acrylatbinder A8-Gewicht auf Netz [%] | Acrylatbinder A8 Badkonzentration[g/l] |
|---|---|---|---|---|---|---|
| Netz 1 | 100 | 3,2 | 0 | 0 | 0,55 | 5 |
| Netz 2 | 100 | 3,2 | 100 | 3,2 | 1 | 10 |
| Netz 3 | 0 | 0 | 100 | 3,2 | 0,55 | 5 |

Die für die Versuche jeweils eingesetzten Netze wurden mit einer wässrigen Formulierung aus dem Insektizid alpha-Cypermethrin, dem Insektizid Chlorfenapyr, dem Acrylatbinder A8 sowie einem Vernetzer auf Isocyanatbasis imprägniert, getrocknet und 1 min bei ca. 100°C vernetzt. Die Menge an Insektizid, wie in Tab 2 angegeben, wird eingestellt, indem man die Flüssigkeitsaufnahme des Netzes (ggf. nach Abquetschen unter definierten Bedingungen) bestimmt und die Konzentration der Formulierung so anpasst, dass die gewünschte Menge pro m² auf dem Netz erhalten wird. Die Bindermenge wurde entsprechend dem Insektizidgehalt angepasst.

### C) Test der Netze

Die behandelten Netze wurden wie in Tabelle 3 angegeben mehrfach gewaschen. Das Waschen wurden entsprechend der Vorschrift *"Montpellier washing procedure"* (wie im Anhang WHO PVC, 3/07/2002 "Evaluation of wash resistance of long-lasting insecticidal nets" beschrieben) durchgeführt. Es wurde anhand der Vorschrift in WO 2005/064072, S. 46 gearbeitet.

Die Muster wurden einer biologischen Prüfung unterzogen wie in WO 2005/064072, S. 47 unterzogen. Diese biologische Prüfung entspricht dem "Cone Test" der WHO" (WHOPES 96.1) mit geringen Anpassungen. Es wurden der "Knock Down" nach 60 Minuten und die Mortalität nach 24 h ermittelt.

Es wurden für die Versuche einerseits ein nicht gegen Pyrethroide resistenter Stamm von *Aedes aegypti* sowie ein gegen Pyrethroide resistenter Stamm von *Anopheles gambiae* eingesetzt.

**Tabelle 3**

| | | *Aedes aegypti* | *Aedes aegypti* | *Anopheles Gambiae* | *Anopheles Gambiae* |
|---|---|---|---|---|---|
| | Wäschen | % KD | % Mortalität | % KD | % Mortalität |
| Netz 1 | 0 | 100 | 100 | 20 | 40 |
| Netz 1 | 20 | 98 | 96 | 15 | 38 |
| Netz 2 | 0 | 98 | 95 | 96 | 90 |
| Netz 2 | 20 | 100 | 100 | 100 | 85 |
| Netz 3 | 0 | 100 | 92 | 90 | 85 |
| Netz 3 | 20 | 98 | 98 | 85 | 80 |

Die Ergebnisse beweisen, dass erfindungsgemäße Netze auch gegen pyrethroidresistente Anopheles-Mücken eine gute Wirkung zeigen.

## Patentansprüche

1. Substrat, beschichtet mit einer Zusammensetzung enthaltend
A) 0,1 bis 45 Gew.-% (bezogen auf die Summe aus A und B) einer Mischung A, bestehend aus
A1) 99 bis 1 Gew.-% (bezogen auf A) alpha-Cypermethrin;
A2) 1 bis 99 Gew.-% (bezogen auf A) Chlorfenapyr,
und
B) 99,9 bis 55 Gew.-% (bezogen auf die Summe aus A und B) eines Acrylatbinders, erhältlich durch Emulsionspolymerisation von
B1) 20 bis 93 Gew.-% (bezogen auf B) eines oder mehrerer (Meth)acrylate der Formel (I)
H₂C=CR¹-COOR² (I)
wobei
R¹ H oder CH₃ und
R² eine lineare oder verzweigte C₁-C₁₂-Alkylgruppe bedeuten;
B2) 1 bis 5 Gew.-% (bezogen auf B) mindestens eines Monomers aus der Gruppe N-Methylolacrylamid, N-Methylolmethacrylamid, N-N'-Bismethylolmaleinsäurediamid und N,N'-Bismethylolfumarsäurediamid;
B3) 0,2 bis 5 Gew.-% (bezogen auf B) mindestens eines Monomers aus der Gruppe Acrylsäure, Methacrylsäure, Vinylsulfonsäure, Maleinsäure und Fumarsäure;
B4) 0 bis 5 Gew.-% (bezogen auf B) mindestens eines Monomers aus den Gruppen
B4A) Monomere der Formel (II) und/oder (III),
H₂C=CR³X (II)
ZHC=CHZ (III)
wobei die Symbole folgende Bedeutungen haben:
R³ ist H oder CH₃;
X ist Z, -CO-NH-CH₂-NH-CO-CR³=CH₂ oder COO-CH₂-CO-CH₂-COOR⁴;
Z ist gleich CONH₂, CONH-CH₂-OR⁵, COO-Y-OH, CO-Glycidyl, CHO oder CO-Y-OH;
Y ist C₁-C₈-Alkylen und
R⁴, R⁵ sind gleich oder verschieden eine lineare oder verzweigte C₁-C₁₀-Alkylgruppe;
B4B) Acrylsäureallylester, Acrylsäuremethallylester, Methacrylsäureallylester, Methacrylsäuremethallylester, Maleinsäurediallylester, Maleinsäuredimethallylester, Fumarsäureallylester, Fumarsäuremethallylester, Phthalsäurediallylester, Phthalsäuredimethallylester, Terephthalsäurediallylester, Terephthalsäuredimethallylester, p-Divinylbenzol und Ethylenglykoldiallylether;
B5) 0 bis 40 Gew.-% (bezogen auf B) mindestens eines Monomers aus den Gruppen
B5A) Acrylnitril, Methacrylnitril, Maleinsäuredinitril und Fumarsäuredinitril und/oder
B5B) von B1 - B4 verschiedene, unpolare ethylenisch ungesättigte Monomere;
wobei das gewichtsmittlere Molekulargewicht der nicht vernetzten Emulsionspolymere zwischen 40 000 und 250 000 Dalton, bestimmt mit Gel-Permeations-Chromatographie liegt.

2. Substrat gemäß Anspruch 1, wobei die Komponente B1 des Acrylatbinders B n-Butylacrylat ist.

3. Substrat gemäß einem der Ansprüche 1 und 2, wobei die Komponente B2 des Acrylatbinders B N-Methylolacrylamid oder N-Methylolmethacrylamid ist.

4. Substrat gemäß einem der Ansprüche 1 bis 3, wobei die Komponente B3 des Acrylatbinders Acrylsäure ist.

5. Substrat gemäß einem der Ansprüche 1 bis 4 in Form eines Textilmaterials.

6. Substrat gemäß einem der Ansprüche 1 bis 5 in Form eines Netzes.

7. Wässrige Formulierung zur insektiziden Beschichtung von Substraten, enthaltend eine Zusammensetzung gemäß einem der Ansprüche 1 bis 4.

8. Wässrige Formulierung gemäß Anspruch 7, enthaltend einen Vernetzer, welcher über freie Isocyanatgruppen verfügt.

9. Verfahren zur Bekämpfung von Schadinsekten und/oder Verfahren zum Schutz von Menschen und/oder Haustieren vor Schadinsekten und/oder zum Schutz vor vektorübertragenen Krankheiten, welche durch Schadinsekten übertragen werden, wobei man in einem Gebäude, das von den Menschen und/oder Haustieren genutzt wird, ein Substrat gemäß einem der Ansprüche 1 bis 6 anbringt.

10. Verwendung eines Substrats gemäß einem der Ansprüche 1 bis 6 zur Bekämpfung von Schadinsekten in Gebäuden, zum Schutz von Menschen und/oder Haustieren vor Schadinsekten und/oder zum Schutz von Menschen und/oder Haustieren vor vektorübertragenen Krankheiten, welche durch Schadinsekten übertragen werden.

11. Verfahren gemäß Anspruch 9 oder Verwendung gemäß Anspruch 10, wobei die Schadinsekten eine Pyrethroidresistenz aufweisen.

## Claims

1. A substrate, coated with a composition comprising
A) 0.1 to 45% by weight (based on the total of A plus B) of a mixture A, consisting of
A1) 99 to 1% by weight (based on A) of alpha-cypermethrin;
A2) 1 to 99% by weight (based on A) of chlorfenapyr,
and
B) 99.9 to 55% by weight (based on the total of A plus B) of an acrylate binder, obtainable by emulsion polymerization of
B1) 20 to 93% by weight (based on B) of one or more (meth)acrylates of the formula (I)
H₂C=CR¹-COOR² (I)
where
R¹ is H or CH₃ and
R² is a linear or branched C₁-C₁₂-alkyl group;
B2) 1 to 5% by weight (based on B) of at least one monomer selected from the group consisting of N-methylolacrylamide, N-methylolmethacrylamide, N,N'-bismethylolmaleic diamide and N,N'-bismethylolfumaric diamide;
B3) 0.2 to 5% by weight (based on B) of at least one monomer selected from the group consisting of acrylic acid, methacrylic acid, vinylsulfonic acid, maleic acid and fumaric acid;
B4) 0 to 5% by weight (based on B) of at least one monomer selected from the groups
B4A) monomers of the formula (II) and/or (III),
H₂C=CR³X (II) ZHC=CHZ (III)
where the symbols have the following meanings:
R³ is H or CH₃;
X is Z, -CO-NH-CH₂-NH-CO-CR³=CH₂ or COO-CH₂-CO-CH₂-COOR⁴;
Z is CONH₂, CONH-CH₂-OR⁵, COO-Y-OH, CO-glycidyl, CHO or CO-Y-OH;
Y is C₁-C₈-alkylene and
R⁴, R⁵ are identical or different and are a linear or branched C₁-C₁₀-alkyl group;
B4B) allyl acrylate, methallyl acrylate, allyl methacrylate, methallyl methacrylate, diallyl maleate, dimethallyl maleate, allyl fumarate, methallyl fumarate, diallyl phthalate, dimethallyl phthalate, diallyl terephthalate, dimethallyl terephthalate, p-divinylbenzene and ethylene glycol diallyl ether;
B5) 0 to 40% by weight (based on B) of at least one monomer selected from the groups
B5A) acrylonitrile, methacrylonitrile, maleonitrile and fumaronitrile and/or
B5B) unpolar ethylenically unsaturated monomers other than B1-B4;
where the weight-average molecular weight of the non-crosslinked emulsion polymers is between 40 000 and 250 000 daltons, determined by gel permeation chromatography.

2. The substrate according to claim 1, wherein component B1 of the acrylate binder B is n-butyl acrylate.

3. The substrate according to either of claims 1 and 2, wherein component B2 of the acrylate binder B is N-methylolacrylamide or N-methylolmethacrylamide.

4. The substrate according to any of claims 1 to 3, wherein component B3 of the acrylate binder is acrylic acid.

5. The substrate according to any one of claims 1 to 4 in the form of a textile material.

6. The substrate according to any one of claims 1 to 5 in the form of a net.

7. An aqueous formulation for providing substrates with an insecticide coating, comprising a composition according to any of claims 1 to 4.

8. The aqueous formulation according to claim 7, comprising a crosslinker which has free isocyanate groups.

9. A method of controlling harmful insects and/or a method of protecting humans and/or domestic animals from harmful insects and/or of protecting from vector-transmitted diseases which are transmitted by harmful insects, wherein a substrate according to any one of claims 1 to 6 is applied in a building which is used by the humans and/or the domestic animals.

10. The use of a substrate according to any one of claims 1 to 6 for controlling harmful insects in buildings, for protecting humans and/or domestic animals from harmful insects and/or for protecting humans and/or domestic animals from vector-transmitted diseases which are transmitted by harmful insects.

11. The method according to claim 9 or the use according to claim 10, wherein the harmful insects display a pyrethroid resistance.

## Revendications

1. Substrat, revêtu avec une composition contenant :
A) 0,1 à 45 % en poids (par rapport à la somme de A et B) d'un mélange A, constitué par :
A1) 99 à 1 % en poids (par rapport à A) d'alpha-cyperméthrine ;
A2) 1 à 99 % en poids (par rapport à A) de chlorfénapyr,
et
B) 99,9 à 55 % en poids (par rapport à la somme de A et B) d'un liant acrylate, pouvant être obtenu par polymérisation en émulsion de
B1) 20 à 93 % en poids (par rapport à B) d'un ou de plusieurs (méth)acrylates de formule (I)
H₂C=CR¹-COOR² (I)
dans laquelle
R¹ signifie H ou CH₃ et
R² signifie un groupe alkyle en C₁-C₁₂ linéaire ou ramifié ;
B2) 1 à 5 % en poids (par rapport à B) d'au moins un monomère du groupe constitué par le N-méthylolacrylamide, le N-méthylolméthacrylamide, le diamide de l'acide N,N'-bisméthylolmaléique et le diamide de l'acide N,N'-bisméthylolfumarique ;
B3) 0,2 à 5 % en poids (par rapport à B) d'au moins un monomère du groupe constitué par l'acide acrylique, l'acide méthacrylique, l'acide vinylsulfonique, l'acide maléique et l'acide fumarique ;
B4) 0 à 5 % en poids (par rapport à B) d'au moins un monomère des groupes
B4A) les monomères de formule (II) et/ou (III)
H₂C=CR³X (II) ZHC-CHZ (III)
dans lesquelles les symboles ont les significations suivantes :
R³ signifie H ou CH₃ ;
X signifie Z, -CO-NH-CH₂-NH-CO-CR³=CH₂ ou COO-CH₂-CO-CH₂-COOR⁴ ;
Z signifie CONH₂, CONH-CH₂-OR⁵, COO-Y-OH, CO-glycidyle, CHO ou CO-Y-OH ;
Y signifie alkylène en C₁-C₈, et
R⁴, R⁵ sont identiques ou différents, et signifient un groupe alkyle en C₁-C₁₀ linéaire ou ramifié ;
B4B) l'ester allylique de l'acide acrylique, l'ester méthallylique de l'acide acrylique, l'ester allylique de l'acide méthacrylique, l'ester méthallylique de l'acide méthacrylique, l'ester diallylique de l'acide maléique, l'ester diméthallylique de l'acide maléique, l'ester allylique de l'acide fumarique, l'ester méthallylique de l'acide fumarique, l'ester diallylique de l'acide phtalique, l'ester diméthallylique de l'acide phtalique, l'ester diallylique de l'acide téréphtalique, l'ester diméthallylique de l'acide téréphtalique, le p-divinylbenzène et l'éther diallylique d'éthylène glycol ;
B5) 0 à 40 % en poids (par rapport à B) d'au moins un monomère des groupes :
B5A) l'acrylonitrile, le méthacrylonitrile, le dinitrile de l'acide maléique et le dinitrile de l'acide fumarique et/ou
B5B) les monomères éthyléniquement insaturés apolaires différents de B1 à B4 ;
le poids moléculaire moyen en poids des polymères en émulsion non réticulés étant compris entre 40 000 et 250 000 Daltons, déterminé par chromatographie par perméation de gel.

2. Substrat selon la revendication 1, dans lequel le composant B1 du liant acrylate B est l'acrylate de n-butyle.

3. Substrat selon l'une quelconque des revendications 1 et 2, dans lequel le composant B2 du liant acrylate est le N-méthylolacrylamide ou le N-méthylolméthacrylamide.

4. Substrat selon l'une quelconque des revendications 1 à 3, dans lequel le composant B3 du liant acrylate est l'acide acrylique.

5. Substrat selon l'une quelconque des revendications 1 à 4, sous la forme d'un matériau textile.

6. Substrat selon l'une quelconque des revendications 1 à 5, sous la forme d'un maillage.

7. Formulation aqueuse pour le revêtement insecticide de substrats, contenant une composition selon l'une quelconque des revendications 1 à 4.

8. Formulation aqueuse selon la revendication 7, contenant un agent de réticulation qui dispose de groupes isocyanate libres.

9. Procédé de lutte contre des insectes nuisibles et/ou procédé de protection d'hommes et/ou d'animaux domestiques contre des insectes nuisibles et/ou de protection contre des maladies vectorielles qui sont transmises par des insectes nuisibles, dans lequel un substrat selon l'une quelconque des revendications 1 à 6 est disposé dans un bâtiment utilisé par les hommes et/ou les animaux domestiques.

10. Utilisation d'un substrat selon l'une quelconque des revendications 1 à 6 pour la lutte contre des insectes nuisibles dans des bâtiments, pour la protection d'hommes et/ou d'animaux domestiques contre des insectes nuisibles et/ou pour la protection d'hommes et/ou d'animaux domestiques contre des maladies vectorielles qui sont transmises par des insectes nuisibles.

11. Procédé selon la revendication 9 ou utilisation selon la revendication 10, dans lequel ou dans laquelle les insectes nuisibles présentent une résistance aux pyréthroïdes.
